(19) Europäisches Patentamt
European Patent Office
Office européen des brevets

(11) **EP 4 672 422 A1**

(12) **EUROPEAN PATENT APPLICATION**
published in accordance with Art. 153(4) EPC

(43) Date of publication:
**31.12.2025 Bulletin 2026/01**

(51) International Patent Classification (IPC):
**H01M 10/44** (2006.01)  **H02J 7/00** (2006.01)
**H02H 7/18** (2006.01)

(21) Application number: **24899144.0**

(22) Date of filing: **21.05.2024**

(86) International application number:
**PCT/CN2024/094517**

(87) International publication number:
**WO 2025/118492 (12.06.2025 Gazette 2025/24)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **04.12.2023  CN 202311684189**

(71) Applicant: **Chery Automobile Co., Ltd.
Wuhu, Anhui 241006 (CN)**

(72) Inventors:
• **YU, Chenglong
Wuhu, Anhui 241006 (CN)**

• **WEI, Huifeng
Wuhu, Anhui 241006 (CN)**
• **PAN, Jiachun
Wuhu, Anhui 241006 (CN)**
• **ZHOU, Chongguang
Wuhu, Anhui 241006 (CN)**
• **SU, Wanqiang
Wuhu, Anhui 241006 (CN)**
• **CHEN, Yudong
Wuhu, Anhui 241006 (CN)**
• **JU, Yan
Wuhu, Anhui 241006 (CN)**

(74) Representative: **Yang, Shu
Withers & Rogers LLP
2 London Bridge
London SE1 9RA (GB)**

(54) **BATTERY CHARGING METHOD AND APPARATUS, DEVICE, AND STORAGE MEDIUM**

(57)     The present application relates to the technical field of charging, and discloses a battery charging method and apparatus, a device, and a storage medium. The method comprises: acquiring a current state of charge (SOC) and current state parameters of a target battery, wherein the current state parameters comprise a current charging power, a current charging rate and/or a current temperature rise rate; on the basis of the current SOC, determining state intervals corresponding to the target battery, wherein the state intervals comprise a charging power interval, a charging rate interval and/or a temperature rise rate interval; if each parameter among the current state parameters falls within the corresponding interval among the state intervals, adjusting the charging power of the target battery on the basis of the current SOC and the current charging rate; and if any parameter among the current state parameters does not fall within the corresponding interval among the state intervals, stopping charging and sending alarm information. According to the present application, by means of a mode of combining dynamic charging and fault monitoring, the accuracy of fault monitoring is improved, and the charging efficiency of the target battery is improved.

Acquiring a current state of charge (SOC) and current state parameters of a target battery, wherein the current state parameters includes current charging power, a current charging rate, and/or a current temperature rise rate — 201

Determining state intervals corresponding to the target battery based on the current SOC, wherein the state intervals includes a charging power interval, a charging rate interval, and/or a temperature rise rate interval — 202

Adjusting, in a case where each of the current state parameters is within a corresponding interval of the state intervals, charging power of the target battery based on the current SOC and the current charging rate — 203

Stopping charging in a case where any parameter of the current state parameters is not within a corresponding interval of the state intervals, and sending alarm information — 204

FIG. 2

## Description

The present disclosure claims priority to Chinese Patent Application No. 202311684189.6, titled "METHOD AND APPARATUS FOR CHARGING BATTER, DEVICE AND STORAGE MEDIUM" and filed on December 4, 2023, the content of which is incorporated herein by reference in its entirety.

## TECHNICAL FIELD

The present disclosure relates to the field of charging technologies, and in particular, relates to a method and apparatus for charging a battery, a device and a storage medium.

## BACKGROUND

With the rapid development of new energy technologies, batteries are increasingly prevalent in daily life. In the battery charging and discharging technologies, charging of batteries is primarily achieved by using constant charging voltage and charging current based on fixed boundary parameters. When serious abnormalities occur in the state parameters of the battery during charging, the fault type is determined by identifying and determining the state of the battery.

However, due to the lack of delicacy management for states of the battery in above method, causing it impossible to accurately identify whether the state of the battery is abnormal. Identification results of fault only triggers an alarm when state parameters of the battery exhibit severe abnormalities, while the battery is typically already damaged in various degrees at this point. Consequently, the current charging efficiency of the battery is suboptimal.

## SUMMARY

The present disclosure provides a method and apparatus for charging a battery, a device and a storage medium that can improve the charging efficiency of the battery. The technical solutions are as follows.

In one aspect, a method for charging a battery is provided. The method including:

acquiring a current state of charge (SOC) and current state parameters of a target battery, wherein the current state parameters include current charging power, a current charging rate and/or a current temperature rise rate;

determining state intervals corresponding to the target battery based on the current SOC, wherein the state intervals include a charging power interval, a charging rate interval and/or a temperature rise rate interval;

adjusting, in a case where each of the current state parameters is within a corresponding interval of the state intervals, charging power of the target battery based on the current SOC and the current charging rate; and

stopping charging in a case where any parameter of the current state parameters is not within a corresponding interval of the state intervals, and sending alarm information.

Optionally, adjusting the charging power of the target battery based on the current SOC and the current charging rate includes:

determining a recommended charging rate corresponding to the target battery based on the current SOC, wherein the recommended charging rate includes a maximum charging rate and a minimum charging rate, the maximum charging rate being less than a maximum value of the charging rate interval, and the minimum charging rate being greater than a minimum value of the charging rate interval;

increasing the charging power of the target battery in a case where the current charging rate is less than the minimum charging rate, such that a charging rate of the target battery is greater than or equal to the minimum charging rate; and

decreasing the charging power of the target battery in a case where the current charging rate is greater than the maximum charging rate, such that the charging rate of the target battery is less than or equal to the maximum charging rate.

Optionally, upon determining the recommended charging rate corresponding to the target battery based on the current SOC, the method further includes:

correcting the recommended charging rate corresponding to the target battery based on a current battery temperature and a battery aging parameter of the target battery, wherein the battery aging parameter indicates an effect of battery life degradation on a charging state of the target battery during use.

Optionally, upon determining the state interval corresponding to the target battery based on the current SOC, the method further includes:

correcting the state interval based on a current battery temperature and a battery aging parameter of the target battery, wherein the battery aging parameter indicates an effect of battery life degradation on a charging state of the target battery during use.

Optionally, the method further including:

determining the battery aging parameter based on historical charging data of the target battery, wherein the historical charging data includes a change amount in charging power, cumulative usage duration and/or a number of charging cycles, wherein the change amount in charging power includes an increase in charging power and/or a decrease in charging power.

Optionally, the method further including:

monitoring a charging duration of the target battery; and
stopping charging in a case where the charging duration is greater than a first duration threshold or less than a second duration threshold, and sending alarm information, the first duration threshold being greater than the second duration threshold.

In another aspect, an apparatus for charging a battery is provided, the device including:

a battery information acquiring module, configured to acquire a current state of charge (SOC) and current state parameters of a target battery, the current state parameters including current charging power, a current charging rate and/or a current temperature rise rate;
a state interval determining module, configured to determine a state interval corresponding to the target battery based on the current SOC, the state intervals including a charging power interval, a charging rate interval and/or a temperature rise rate interval;
a power adjusting module, configured to adjust, in a case where each of the current state parameters is within a corresponding interval of the state intervals, charging power of the target battery based on the current SOC and the current charging rate; and
an alarming module, configured to stop charging in a case where any parameter of the current state parameters is not within a corresponding interval of the state intervals, and send alarm information.

Optionally, the power adjusting module includes:

a rate determining submodule, configured to determine a recommended charging rate corresponding to the target battery based on the current SOC, wherein the recommended charging rate includes a maximum charging rate and a minimum charging rate, the maximum charging rate being less than a maximum value of the charging rate interval, and the minimum charging rate being greater than a minimum value of the charging rate interval;
a power increasing submodule, configured to increase the charging power of the target battery in a case where the current charging rate is less than the minimum charging rate, such that a charging rate of the target battery is greater than or equal to the minimum charging rate; and
a power decreasing submodule, configured to decrease the charging power of the target battery in a case where the current charging rate is greater than the maximum charging rate, such that the charging rate of the target battery is less than or equal to the maximum charging rate.

Optionally, the rate determining submodule is further configured to:

correct the recommended charging rate corresponding to the target battery based on a current battery temperature and a battery aging parameter of the target battery, wherein the battery aging parameter indicates an effect of battery life degradation on a charging state of the target battery during use.

Optionally, the state interval determining module is further configured to:

correct the state interval based on a current battery temperature and a battery aging parameter of the target battery, wherein the battery aging parameter indicates an effect of battery life degradation on a charging state of the target battery during use.

Optionally, the battery information acquiring module is further configured to:

determine the battery aging parameter based on historical charging data of the target battery, wherein the historical charging data includes a change amount in charging power, cumulative usage duration, and/or a number of charging cycles, wherein the change amount in charging power includes an increase in charging power and/or a decrease in charging power.

Optionally, the alarm module is further configured to:

monitor a charging duration of the target battery; and

stop charging in a case where the charging duration is greater than a first duration threshold or less than a second duration threshold, and send alarm information, the first duration threshold being greater than the second duration threshold.

In another aspect, a computer device is provided. The computer device includes a memory and a processor, the memory is configured to store one or more computer programs, wherein the processor, when loading and executing the one or more computer programs stored in the memory, is caused to perform the method for charging a battery as described above.

In another aspect, a computer-readable storage medium is provided. The storage medium stores one or more computer programs, wherein a processor, when loading and executing the one or more computer programs, is caused to perform the method for charging a battery as described above.

In another aspect, a computer program product including one or more instructions is provided, wherein a computer, when loading and executing the one or more instructions, is caused to perform the method for charging a battery as described above.

The technical solutions according to present disclosure at least achieve the following beneficial effects.

By determining the state interval corresponding to the target battery based on the current SOC of the target battery, during the charging process of the target battery, the charging power is adjusted based on the current SOC and the current charging rate in a case where each of the current state parameters is within the corresponding interval of the state intervals, thereby achieving dynamic adjustment of the charging power based on the SOC and the charging rate of the battery during the charging process of the battery. The target battery is determined as abnormal in charging in a case where any parameter of the current state parameters is not within the corresponding interval of the state intervals, and the charging is stopped and alarm information is sent, thereby achieving dynamic management of the charging of the target battery. That is, in the present disclosure, whether the target battery is faulty is determined based on the current state parameters and the state interval of the target battery in the dynamic charging process. In this way, compared with the conventional method for determining the abnormality of the battery, due to the dynamic charging method, the state interval is more accurate. The range of the state interval corresponding to the target battery is reduced, the determined range of the state abnormality is expanded, so as to identify the fault state of the battery prior to the state parameters of the battery being seriously abnormal, thereby improving the accuracy of determining the state abnormality of the battery and improving the charging efficiency of the battery.

## BRIEF DESCRIPTION OF DRAWINGS

In order to illustrate the technical solutions of the embodiments of the present disclosure more clearly, the accompanying drawing that needs to be used in the embodiments of the present disclosure will be briefly introduced below. Obviously, the accompanying drawings described below are only some embodiments of the present disclosure, and those skilled in the art can acquire other drawings according to these drawings without making creative efforts.

FIG. 1 is a schematic diagram of an implementation environment according to some embodiments of the present disclosure;

FIG. 2 is a flowchart of a method for charging a battery according to some embodiments of the present disclosure;

FIG. 3 is a schematic structural diagram of an apparatus for charging a battery according to some embodiments of the present disclosure; and

FIG. 4 is a schematic structural diagram of a computer device according to some embodiments of the present disclosure.

## DETAILED DESCRIPTION

In order to make the objectives, technical solutions and advantages of the embodiments of the present disclosure clearer, the embodiments of the present disclosure will be further described in detail below with reference to the accompanying drawings.

Before explaining the method for charging a battery according to some embodiments of the present disclosure in detail, the applying scenarios and implementation environment involved in the embodiment of the present disclosure are first introduced.

The embodiments of the present disclosure are mainly applied in scenarios of charging control and fault monitoring for vehicle batteries, and are also applied in scenarios of charging control and fault monitoring for other types of batteries based on the principle of the technical solutions of the present disclosure.

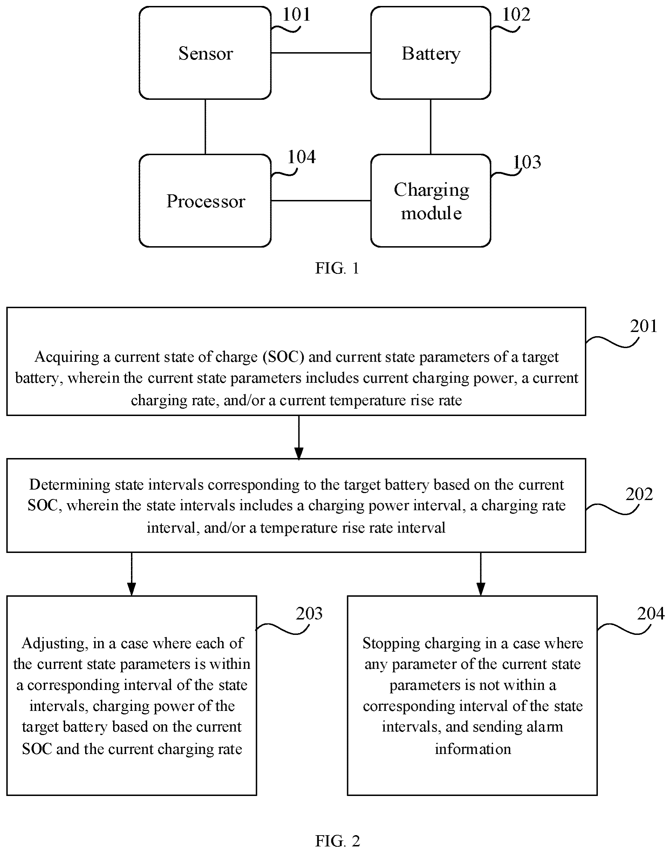

Referring to FIG. 1, FIG. 1 is a schematic diagram illustrating an implementation environment according to an exemplary embodiment. The implementation environment includes at least one sensor 101, a battery 102, a charging module 103, and a processor 104.

The sensor 101 is connected to the battery 102 and the processor 104, and is configured to acquire charging parameters of the battery 102, such as the state of charge (SOC), charging power, charging rate, temperature rise rate of the battery, and transmit the acquired charging parameters to the processor 104.

In some embodiments, the sensor 101 is a sensor integrated into the battery 102. The sensor 101 determines the charging power, charging rate, and temperature rise rate of the battery 102 by acquiring parameters such as the voltage, current, battery temperature, and SOC of the battery 102, and transmits the SOC, charging power, charging rate, and temperature rise rate to the processor 104.

In some embodiments, the charging power is also determined based on the charging module 103, that is, in a case where the charging module 103 charges the battery 102, the current output power is determined as the charging power and sent to the processor 104. Whether the specific charging power is the output power of the charging module 103 or the receiving power of the battery 102 is determined based on actual usage requirements, which is not limited in the embodiments of the present disclosure.

In some embodiments, the sensor 101 is further configured only to acquire parameters such as the voltage, current, battery temperature, and SOC of the battery 102, and transmit the parameters to the processor 104, such that the processor 104 determines the charging power, charging rate, and temperature rise rate of the battery based on the parameters.

The battery 102 is configured to provide electrical energy to electrical components. For example, the battery 102 is a vehicle battery configured to provide electrical energy for a vehicle, so as to achieve power output of the vehicle.

The charging module 103 is configured to charge the battery 102. The charging module 103 has one terminal connected to a power source and another terminal connected to the battery 102, thereby charging the battery 102. The charging module 103 is selected based on various implementation environments. For example, in a case where the battery 102 is the vehicle battery, the charging module 103 is a vehicle charger, a charging controller, or the like.

The processor 104 is configured to monitor the state parameters of the battery 102 during the charging process, and control the charging power in the charging process based on the SOC and state parameters of the battery 102 during the charging process. In a case where the state parameters are abnormal, the charging is stopped and alarm information is sent.

In some embodiments, in a case where the charging power of the battery needs to be adjusted, the processor 104 transmits an adjustment signal to the charging module 103 to control the output power of the charging module 103, thereby achieving control of the charging power during the charging process of the battery 102.

In some embodiments, the processor 104 further determines whether the battery 102 is abnormal based on the input power from the charging module 103 and the received power of the battery 102 comprehensively.

For example, in a case where the power difference between the input power from the charging module 103 and the received power of the battery 102 is greater than a preset power threshold, the processor 104 determines that the battery 102 is abnormal, controls the charging module 103 to stop charging the battery 102 and sends alarm information.

The method for charging a battery according to some embodiments of the present disclosure is performed by the processor 104. The processor 104 is a general-purpose CPU (central processing unit), an NP (network processor), a microprocessor, or one or more integrated circuits for implementing the solutions of the present disclosure, such as an ASIC (application- specific integrated circuit), a PLD (programmable logic device), or any combination thereof. The PLD is a CPLD (complex programmable logic device), an FPGA (field-programmable gate array), a GAL (generic array logic), or any combination thereof.

Those skilled in the art should understand that the above sensor 101, battery 102, charging module 103 and processor 104 are only examples. Other existing or future sensors, batteries, charging modules or processors that are applicable to the embodiments of the present disclosure should also be included in the scope of protection of the embodiments of the present disclosure and are incorporated herein by reference.

It should be noted that the applying scenarios and implementation environments in the embodiments of the present disclosure are intended to more clearly illustrate the technical solutions of the embodiments of the present disclosure, and do not constitute a limitation on the technical solutions according to the embodiments of the present disclosure. Those of ordinary skills in the art know that with the emergence of new applying scenarios and the evolution of the implementation environment, the technical solutions according to the embodiments of the present disclosure are also applicable to similar technical problems.

The follows are detailed explanation of the method for charging a battery according to some embodiments of the present disclosure.

FIG. 2 is a flowchart of a method for charging a battery according to some embodiments of the present disclosure, which is applied to the above processor 104. Referring to FIG. 2, the method includes the following processes.

In 201, the current state of charge (SOC) and current state parameters of a target battery are acquired, wherein the current state parameters include current charging power, current charging rate, and/or current temperature rise rate.

The current charging power is determined based on the charging voltage and charging current output by the charging module currently, or based on the current charging voltage and charging current of the battery. For example, the charging power is determined by the formula of P=U*I, wherein P is the charging power, U is the charging voltage, and I is the charging current.

In some embodiments, in order to avoid the failure to timely monitor the change in charging power due to the abnormality of the battery, the current charging power of the target battery is determined by the charging voltage and charging current output by the charging module currently.

The charging rate is understood as the changing rate of the SOC of the battery, such as the change amount in the SOC of the battery per unit time. The processor determines the current charging rate of the battery based on the SOC of the battery at a previous time point (such as the previous second or the previous minute) and the current SOC of the battery.

The temperature rise rate is understood as the changing rate of the temperature of the battery, such as the change amount in temperature of the battery per unit time. Similarly, the processor determines the current temperature rise rate of the battery based on the temperature of the battery at a previous time point (such as the previous second or the previous minute) and the current temperature of the battery.

In 202, the state interval corresponding to the target battery is determined based on the current SOC, wherein the state intervals include a charging power interval, a charging rate interval, and/or a temperature rise rate interval.

It should be noted that the state intervals are understood as intervals determined based on boundary values of the state parameters. Taking the charging power interval as an example, the charging power interval is understood as a power interval defined by the maximum power and minimum power corresponding to the current SOC of the target battery.

In some embodiments, the state intervals corresponding to the target battery are initial state intervals provided by the manufacturer of the battery, such as an initial charging power interval, an initial charging rate interval, and an initial temperature rise rate interval.

In some other embodiments, considering that batteries from different production batches differ from each other, in order to improve the accuracy of the state intervals, the state intervals of the same batch of batteries in different SOCs are determined based on test data of charging experiments of this batch of batteries through statistical analysis and other methods.

For example, the state parameters of the battery in various charging states are determined based on experimental data of the battery. For example, the distribution of the state parameters corresponding to respective SOCs are acquired based on the state parameters corresponding to different SOCs in a fast-charging state of the battery and the state parameters corresponding to different SOCs in a slow-charging state of the battery, and a mapping relationship between the SOCs of the battery and the boundary values of the state parameters are determined based on mathematical statistical analysis. In this way, the boundary values of respective state parameters corresponding to the current SOC of the target battery are determined based on the mapping relationship and the current SOC of the target battery, thereby acquiring the state intervals corresponding to the target battery.

In some embodiments, in a case where the state intervals corresponding to the target battery are determined through experimental data of batteries from the same batch, in a case where the state parameters of a certain battery exceeds the initial state intervals provided by the manufacturer of the battery, the battery is determined to have an abnormal state and needs to be returned to the factory for repair, and the experimental data of charging of the battery also needs to be deleted to avoid affecting the accuracy of the state intervals.

In some embodiments, considering that the state parameters of the target battery are significantly different in various charging modes, such as the fast-charging mode and slow-charging mode, first state intervals and second state intervals are set. The first state intervals include a first charging power interval, a first charging rate interval, and/or a first temperature rise rate interval, and the second state intervals include a second charging power interval, a second charging rate interval, and/or a second temperature rise rate interval. In a case where the current charging mode of the target battery is the fast-charging mode, the first state intervals are set as the state intervals corresponding to the target battery, and in a case where the current charging mode of the target battery is the slow-charging mode, the second state intervals are set as the state intervals corresponding to the target battery.

In some embodiments, upon determining the state intervals corresponding to the target battery based on the current SOC, the state intervals are also corrected based on the current battery temperature and battery aging parameter of the target battery. The battery aging parameter indicates the effect of the battery life degradation on the charging state of the target battery during use.

It should be noted that the state parameters of the battery during the charging process also change under various battery temperature conditions. Taking charging power as an example, in a case where the voltage is constant, the charging current increases as the temperature of the battery rises, resulting in higher charging power and a faster charging rate, and in low-temperature environments, the increased internal resistance of the battery causes the charging current to decrease, resulting in lower charging power and a slower charging rate. Therefore, upon determining the target state intervals corresponding to the target battery, the state intervals are corrected based on the current battery temperature of the target battery, and fault monitoring of the target battery is implemented based on the corrected state intervals.

The correction relationship between battery temperatures and state intervals is determined based on test data of experiments. For example, the influencing parameters of battery temperatures on charging power, charging rate and temperature rise rate are determined based on the charging power, charging rate and temperature rise rate corresponding to the target battery at the same SOC at different battery temperatures, and then the state intervals corresponding to the target battery are corrected based on the influencing parameters.

Similarly, it is considered that batteries age over their lifespan, and the state parameters of the battery in its charging process are also different at various levels of aging. Taking charging power as an example again, in the case of constant voltage, as of the battery ages, its internal resistance increases, resulting in a decrease in charging current, lower charging power, and a slower charging rate. Therefore, upon determining the target state intervals corresponding to the target battery, the state intervals are corrected based on the current battery aging parameters of the target battery, and fault monitoring for the target battery is implemented based on the corrected state intervals to improve the accuracy of fault monitoring for the target battery.

The correction relationship between the battery aging parameters and the state intervals is also determined based on test data of experiments. The details, are referred to the above method for determining the correction relationship between the battery temperatures and the state intervals, which is not repeated herein.

In some embodiments, the state intervals are corrected based on the battery temperatures and the battery aging parameters sequentially. For example, in a case where the state intervals are corrected based on the battery temperatures, the corrected state intervals are corrected based on the battery aging parameters.

In some other embodiments, the state intervals are also corrected based on the battery temperatures and the battery aging parameters. For example, the target influencing parameters are acquired based on the influencing parameters of the battery temperatures on the state parameters and the influencing parameters of the battery aging parameters on the state parameters. For example, the target influencing parameters are determined by accumulating or weighted summing of the influencing parameters, and the state intervals corresponding to the target battery are corrected based on the target influencing parameters.

It should be noted that the corrected state intervals are understood as state intervals formed based on adjusted boundary values of the state intervals, which is acquired by adjusting the boundary values of the state intervals according to the battery temperatures and the battery aging parameters.

Taking the charging power interval as an example again, assuming the charging power interval corresponding to the current SOC of the target battery is [10 kW, 100 kW], the boundary values 10 kW and 100 kW are adjusted based on the current battery temperature and battery aging parameters of the target battery. For example, assuming the adjusted boundary values are 8 kW and 90 kW, the corrected state interval is [8 kW, 90 kW].

In some embodiments, the target influencing parameter includes an upper-limit influencing parameter and a lower-limit influencing parameter, such that the upper limit of the interval is corrected based on the upper-limit influencing parameter, and the lower limit of the interval is corrected based on the lower-limit influencing parameter; while in some other embodiments, the target influencing parameter is a specific parameter, such that the upper limit and the lower limit of the interval are corrected based on the target influencing parameter. The specific form of the target influencing parameter is determined based on battery characteristics, test data of experiments, and actual usage requirements, and the like.

In some embodiments, the state intervals are corrected based on the same influencing parameter. For example, the charging power interval, charging rate interval, and temperature rise rate interval is corrected based on the same influencing parameter. Alternatively, different intervals of the state intervals are corrected based on a plurality of influencing parameters. For example, the charging power interval is corrected based on a first influencing parameter, the charging rate interval is corrected based on a second influencing parameter, and the temperature rise rate interval is corrected based on a third influencing parameter. Specific correcting is performed based on battery characteristics, test data of experiments, and actual usage requirements, and the like.

In some embodiments, the correction relationship of the state intervals is expressed based on the following formula 1:

$$CB(x) = CA\ (x)\ + \delta C\ (T,\ x)\ + \delta C\ (L,\ x) \qquad \text{Formula 1}$$

wherein x is the current SOC of the battery, CB (x) is the corrected state interval corresponding to the current SOC, CA (x) is the state interval corresponding to the current SOC, $\delta C$ (T, x) is the correction parameter based on the battery temperatures corresponding to the current SOC, and $\delta C$ (L, x) is the correction parameter based on the battery aging parameters corresponding to the current SOC.

In some embodiments, the above CB (x), CA (x), C (T, x) and C (L, x) are mapping relationship tables related to SOC, and the state intervals corresponding to the current SOC and correction parameters such as $\delta C$ (T, x), $\delta C$ (L, x), or the like are determined by looking up the tables.

For example, taking the charging rate as an example, CB (x) is a mapping relationship table for the mapping relationship between the SOCs and the corrected charging rate interval, CA (x) is a mapping relationship table for the mapping relationship between the SOCs and the charging rate interval, C (T, x) is a mapping relationship table for the mapping relationship among the SOCs, battery temperatures, and temperature correction parameters, and C (L, x) is a mapping relationship table for the mapping relationship among the SOCs, the battery aging parameters, and correction parameters for the battery aging parameters.

Taking C (T, x) as an example, C (T, x) is expressed as a mapping relationship table shown as Table 1 below:

Table 1

| C (T, x) | SOC [0, 20) | SOC [20, 40) | SOC [40, 60) | SOC [60, 80) | SOC [80, 100] |
|---|---|---|---|---|---|
| T (-4, -∞) | δ 11 | δ 12 | δ 13 | δ 14 | δ 15 |
| T [-4, -2) | δ 21 | δ 22 | δ 23 | δ 24 | δ 25 |
| T [-2, 0) | δ 31 | δ 32 | δ 33 | δ 34 | δ 35 |
| T [0, 2) | δ 41 | δ 42 | δ 43 | δ 44 | δ 45 |
| T [2, 4) | δ 51 | δ 52 | δ 53 | δ 54 | δ 55 |
| T [4, +∞) | δ 61 | δ 62 | δ 63 | δ 64 | δ 65 |

δ11 to δ65 are temperature correction parameters for the corresponding conditions (abscissa and ordinate). Taking δ11 as an example, δ11 is the temperature correction parameter corresponding to a case that the current SOC is [0, 20) and the current battery temperature is [-5 °C, -∞).

It should be understood that Table 1 above is merely an example of how C (T, x) is represented, using a granularity of 20 of the SOC intervals and a granularity of 2 of the battery temperature intervals as examples. A more refined representation is provided based on actual usage requirements, such as by more finely differentiating the granularities of different SOC intervals and battery temperature intervals. For example, the granularity of the SOC intervals are also 5, 1, and so on.

Table 1 above is merely an example of the mapping logic for describing the mapping relationship. In some embodiments, the division method for the SOC intervals and battery temperature intervals are varied based on actual usage requirements. For example, the battery temperatures are divided into intervals of different sizes based on the sensitivity of the battery to temperatures. For example, the battery temperatures are divided into a plurality of intervals, such as [-30, -∞), [-10, -30), [-5, -10), [0, -5), [5, 0), [20, 5), [25, 20), [27, 25), [28, 27), and [29, 28).

In addition, Table 1 above describes the mapping relationship among the SOCs, battery temperatures, and temperature correction parameters by interval intervals, such as SOC intervals and battery temperature intervals. In some other embodiments, in order to improve the accuracy of the mapping relationship, the mapping relationship among the SOCs, battery temperatures, and temperature correction parameters may also be expressed by node values, such as SOC nodes and battery temperature nodes. In a case where the current SOC and current battery temperature of the target battery are nodes in the mapping relationship, the current temperature correction parameter is acquired based on this mapping relationship. In a case where the current SOC or current battery temperature of the target battery is not a node in the mapping relationship, the current temperature correction parameter is determined based on the nodes in the mapping relationship by using methods such as the interpolation method.

It should be noted that, since the battery temperature is correlated with parameters such as charging power and charging rate, the battery temperature in some embodiments of the present disclosure is understood as the changed temperature of the battery with respect to the normal battery temperature, as shown in Table 1 above. The normal battery temperature is determined based on parameters such as the current ambient temperature, charging power, and charging rate.

In some embodiments, battery aging parameters are determined based on historical charging data of the target battery. The historical charging data includes at least one of the following: a change amount in charging power, cumulative usage duration, and/or a number of charging cycles. The change amount in charging power includes an increase in charging power and/or a decrease in charging power.

It should be noted that in a case where the charging rate of the battery is normal, there's no need to adjust the charging power. However, as the battery ages naturally, the charging rate gradually decreases. In this case, to improve the charging rate, the charging power needs to be increased. Therefore, it is deemed that the increase in charging power reflects the degree of battery aging to a certain extent.

Similarly, cases of environments with high temperatures or abnormal fast charging modes may cause the battery to be charged at an excessively high rate. This excessively high charging rate may increase internal pressure, internal stress, and temperature of the battery, accelerating battery aging. In this case, to reduce the charging rate of the battery, the charging power needs to be decreased. Therefore, it is deemed that the decrease in charging power also reflects the degree of battery aging to a certain extent.

The change amount in charging power is understood as the cumulative sum of the increase in charging power and the decrease in charging power. For example, in a case where the historical charging data of the target battery shows a cumulative increase of 3 kW in charging power and a cumulative decrease of 2 kW in charging power, the change amount in charging power is 3 kW + 2 kW = 5 kW.

As the usage time of the battery increases, the battery naturally ages. Therefore, the cumulative usage duration of the battery also reflects the degree of battery aging to a certain extent. The cumulative usage duration of the battery is understood as the total usage duration of the battery, including charging duration and discharging duration. In some embodiments, the charging duration and discharging duration of the battery is determined from usage data of the battery, so as to acquire the cumulative usage duration of the battery.

Furthermore, each charging process of the battery causes a certain degree of wear and tear on the battery, such as degradation of active materials of the battery and electrode corrosion in each charging process, that is, the battery ages. In other words, the more times the battery is charged, the faster the battery ages. Therefore, the number of charging cycles of the battery is monitored, so as to determine battery aging parameters more accurately.

In some embodiments, different degrees of battery aging are characterized by percentages or other forms, namely battery aging parameters. A battery aging model is then constructed based on test data of experiments. The battery aging model represents the relationship between the degree of battery aging and the change amount in the charging power, the cumulative usage duration and/or the number of charging cycles, and the battery aging parameters are then determined based on the historical charging data of the target battery and the battery aging model.

Optionally, the battery aging model is a mapping relationship table for the mapping relationship between the degree of battery aging and the change amount in charging power, the cumulative usage duration and/or the number of charging cycles, or is a functional relationship between the degree of battery aging and the change amount in charging power, the cumulative usage duration and/or the number of charging cycles. The specific model is determined according to actual usage requirements.

In some embodiments, in order to improve the use efficiency of the battery, alarm information is sent in a case where the battery aging parameter is greater than an aging threshold, so as to prompt the user to replace the battery.

In 203, in a case where each of the current state parameters is within a corresponding interval of the state intervals, the charging power of the target battery is adjusted based on the current SOC and the current charging rate.

Based on the above description, the current state parameters of the target battery include the current charging power, the current charging rate and/or the current temperature rise rate, and the state intervals corresponding to the target battery include the charging power interval, the charging rate interval and/or the temperature rise rate interval. The interval corresponding to the current charging power is the charging power interval, the interval corresponding to the current charging rate is the charging rate interval, and the interval corresponding to the current temperature rise rate is the temperature rise rate interval.

For example, in a case where the current state parameters include the current charging power, the current charging rate, and the temperature rise rate, each of the current state intervals being within the corresponding interval of the state intervals means that the current charging power is within the charging power interval, the current charging rate is within the charging rate interval, and the current temperature rise rate is within the temperature rise rate interval.

In some embodiments, a recommended charging rate corresponding to the target battery is determined based on the current SOC. The recommended charging rate includes a maximum charging rate and a minimum charging rate, the maximum charging rate is less than the maximum value of the charging rate interval, and the minimum charging rate is greater than the minimum value of the charging rate interval. In a case where the current charging rate is less than the minimum charging rate, the charging power of the target battery is increased, such that the charging rate of the target battery is greater than or equal to the minimum charging rate. In a case where the current charging rate is greater than the maximum charging rate, the charging power of the target battery is decreased, such that the charging rate of the target battery is less than or equal to the maximum charging rate.

In some embodiments, in a case where the current charging rate is greater than or equal to the minimum charging rate and less than or equal to the maximum charging rate, the charging rate of the target battery is deemed to be within a reasonable range, and the charging power of the target battery is not to be adjusted.

In some embodiments, the recommended charging rate corresponding to the target battery is determined according to the charging rate recommended by the manufacturer of the battery.

In some other embodiments, considering the potential differences between batteries from different production batches, the charging rates of batteries from the same batch at different SOCs are determined through statistical analysis or other methods based on test data of charging experiments of batteries from the same batch. Furthermore, based on information such as expert experience and battery characteristics, a mapping relationship between the SOC corresponding to the target battery and the recommended charging rate is determined. Based on this mapping relationship and the current SOC of the target battery, the recommended charging rate corresponding to the target battery currently is determined.

In some embodiments, the recommended charging rate further includes an optimal charging rate. In a case where the current charging rate of the target battery is greater than the maximum charging rate or less than the minimum charging rate, the charging power of the target battery is adjusted to cause the charging rate to be equal to or close to the optimal charging rate, e.g., by making the difference between the charging rate and the optimal charging rate less than a difference threshold.

It should be noted that in a case where the charging power of the target battery is adjusted to increase or decrease the charging rate, it is necessary to ensure that each of the state parameters of the target battery is within the corresponding interval of the state intervals. That is, in a case where the charging power of the target battery is adjusted to cause the charging rate to be greater than or equal to the minimum charging rate and less than or equal to the maximum charging rate, the charging continues in the current state in a case where the current charging power, current charging rate, and current temperature rise rate of the target battery are within the corresponding intervals in the state intervals, and the charging is stopped immediately in a case where the current charging power, current charging rate, or current temperature rise rate of the target battery is not within the corresponding interval of the state intervals and alarm information is sent.

In some embodiments, upon determining the recommended charging rate corresponding to the target battery based on the current SOC, the recommended charging rate corresponding to the target battery is further corrected based on the current battery temperature and battery aging parameters of the target battery. The aging parameters indicate the effect of the battery life degradation on the charging state of the target battery during use.

It should be noted that, as described above, the charging rate of the target battery varies under different temperature conditions of the battery or as the target battery ages. Therefore, in order to ensure that the recommended charging rate corresponding to the target battery better matches the current operating condition of the target battery (i.e., in order to ensure that the recommended charging rate corresponding to the target battery better matches the actual scenario of the current battery temperature and battery aging parameters of the target battery), the recommended charging rate according to the target battery is corrected based on the current temperature and battery aging parameters of the target battery. The charging power of the target battery is adjusted based on this corrected recommended charging rate and the current SOC of the target battery.

In some embodiments, for the implementation method of correcting the recommended charging rate corresponding to the target battery based on the current battery temperature and battery aging parameters of the target battery, reference is made to the above relevant description of correcting state intervals based on the current battery temperature and battery aging parameters of the target battery, which are not repeated herein.

In 204, in a case where any parameter of the current state parameters is not within the corresponding interval of the state intervals, the charging is stopped and alarm information is sent.

In a case where any parameter of the current state parameters is not within the corresponding interval of the state intervals, it indicates that the current charging state of the target battery is abnormal. In this case, in order to ensure the safety of the target battery during the charging process, the charging of the target battery is stopped and alarm information is sent.

In some embodiments, different alarm information is sent for different abnormalities, thereby indicating different abnormal conditions of the current target battery with the different alarm information. For example, in a case where the current charging power of the target battery is not within the charging power interval, first alarm information is sent; and in a case where the current charging rate of the target battery is not within the charging rate interval, second alarm information is sent, and so on.

In some embodiments, the charging duration of the target battery is also monitored. In a case where the charging duration is greater than a first duration threshold or less than a second duration threshold, the charging is stopped and alarm information is sent. The first duration threshold is greater than the second duration threshold.

In a case where the charging duration of the target battery is greater than the first duration threshold, it indicates that the charging duration of the target battery of this time is too long. In order to avoid charging the target battery in cases such as failure of the battery or failure of the charging device, the charging of the target battery is stopped and alarm information is sent.

It should be noted that, considering that many factors affect the battery charging process, such as unexpected power outages and user-initiated termination of charging, the charging duration of the target battery in some embodiments is understood as the charging duration from the start of charging to full charge of the target battery. In a case where the target battery is not fully charged at the end of charging, the abnormality determining of the charging duration based on the first and second duration thresholds is not performed.

In addition, considering that the duration required to complete charging of the battery varies at different SOCs, the first and second duration thresholds in some embodiments is determined based on the SOC of the battery when charging begins.

In some embodiments, the first and second duration thresholds are determined based on test data of experiments. For example, the time taken to fully charge the target battery starting from different SOCs is determined based on experimental data, and the theoretical maximum and minimum duration required to fully charge the target battery starting from different SOCs are determined based on a plurality of experimental duration. The theoretical maximum duration is determined as the first duration threshold, and the theoretical minimum duration is determined as the second duration threshold.

In some embodiments, also considering the influence of the battery temperature and battery aging parameters, the first duration threshold and the second duration threshold are still corrected based on the current battery temperature and battery aging parameters of the target battery, and the determining on whether the battery charging duration is abnormal is made based on the corrected first duration threshold and the corrected second duration threshold.

In some embodiments, for the method for correcting the first duration threshold and the second duration threshold based on the battery temperature and the battery aging parameters, reference is made to the above correction of the state intervals, which is not repeated here.

In some embodiments, in a case where the target battery includes a plurality of battery modules, charging control and fault monitoring are performed alternatively based on a plurality of battery modules separately. For example, in a case where the present disclosure is applied to a target vehicle including a first battery pack and a second battery pack, the first state interval, the first recommended charging rate, and the second state interval corresponding to the first battery pack as well as the second recommended charging rate corresponding to the second battery pack are determined. Based on the first state interval and the first recommended charging rate, the charging control and fault monitoring for the first battery pack are implemented. Based on the second state interval and the second recommended charging rate, the charging control and fault monitoring for the second battery pack are implemented.

In the embodiments of the present disclosure, the charging power of the target battery during the charging process is adjusted with the recommended charging rate corresponding to the target battery, so as to realize dynamic charging of the target battery; and in a case where any parameter of the state parameters of the target battery is not within the corresponding interval of the state intervals, the charging of the target battery is stopped, so as to realize fault monitoring of the charging process of the target battery, thereby improving the sensitivity to state abnormalities, improving the accuracy of fault monitoring, and improving the charging efficiency of the target battery by combining dynamic charging with fault monitoring. Moreover, considering that battery operating conditions such as battery temperatures and battery aging parameters affect the state parameters of the target battery during the charging process, the recommended charging rate and state interval corresponding to the target battery are corrected based on battery temperatures and battery aging parameters, such that the dynamic adjustment and fault monitoring during the charging process are combined with the current operating conditions of the target battery, further improving the flexibility of dynamic charging and the accuracy of fault monitoring, and improving the charging efficiency of the target battery. In addition, by monitoring the charging duration of the target battery, macroscopic monitoring of the charging process is realized from the dimension of the charging duration, so as to improve the comprehensiveness of fault monitoring and further improve the accuracy of fault monitoring.

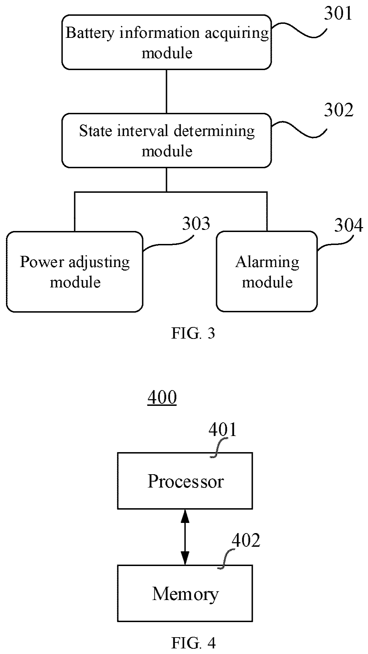

FIG. 3 is a schematic structural diagram of an apparatus for charging a battery according to some embodiments of the present disclosure. The apparatus for charging a battery is implemented as part or all of a device for charging a battery by using software, hardware, or a combination of both. The device for charging a battery is the processor shown in FIG. 1. Referring to FIG. 3, the apparatus includes a battery information acquiring module 301, a state interval determining module 302, a power adjusting module 303, and an alarming module 304.

The battery information acquiring module 301 is configured to acquire the current state of charge (SOC) and current state parameters of the target battery. The current state parameters include the current charging power, the current charging rate, and/or the current temperature rise rate.

The state interval determining module 302 is configured to determine a state interval corresponding to the target battery based on the current SOC. The state intervals include the charging power interval, the charging rate interval, and/or the temperature rise rate interval.

The power adjusting module 303 is configured to adjust the charging power of the target battery based on the current SOC and the current charging rate, in a case where each of the current state parameters is within the corresponding interval of the state intervals.

The alarming module 304 is configured to stop the charging in a case where any parameter of the current state parameters is not within the corresponding interval of the state intervals, and send alarm information.

Optionally, the power adjusting module 303 includes:

a rate determining submodule, configured to determine a recommended charging rate corresponding to the target battery based on the current SOC, the recommended charging rate including a maximum charging rate and a minimum charging rate, the maximum charging rate being less than a maximum value of the charging rate interval, and the minimum charging rate being greater than a minimum value of the charging rate interval;
a power increasing submodule, configured to increase the charging power of the target battery in a case where the current charging rate is less than the minimum charging rate, such that a charging rate of the target battery is greater than or equal to the minimum charging rate; and

a power decreasing submodule, configured to decrease the charging power of the target battery in a case where the current charging rate is greater than the maximum charging rate, such that the charging rate of the target battery is less than or equal to the maximum charging rate.

Optionally, the rate determining submodule is further configured to:
correct the recommended charging rate corresponding to the target battery based on the current battery temperature and battery aging parameters of the target battery, the battery aging parameters indicating the effect of the battery life degradation on the charging state of the target battery during use.

Optionally, the state interval determining module 302 is further configured to:
correct the state interval based on the current battery temperature and battery aging parameters of the target battery, the battery aging parameters indicating the effect of the battery life degradation on the charging state of the target battery during use.

Optionally, the battery information acquiring module 301 is further configured to:
determine the battery aging parameters based on historical charging data of the target battery, the historical charging data including the change amount in charging power, the cumulative usage duration and/or the number of charging cycles, the change amount in charging power including the increase in charging power and/or the decrease in charging power.

Optionally, the alarming module 304 is further configured to:

monitor a charging duration of the target battery; and
stop charging in a case where the charging duration is greater than the first duration threshold or less than the second duration threshold, and send alarm information, the first duration threshold being greater than the second duration threshold.

In the embodiments of the present disclosure, in the embodiments of the present disclosure, the charging power of the target battery during the charging process is adjusted with the recommended charging rate corresponding to the target battery, so as to realize dynamic charging of the target battery; and in a case where any parameter of the state parameters of the target battery is not within the corresponding interval of the state intervals, the charging of the target battery is stopped, so as to realize fault monitoring of the charging process of the target battery, thereby improving the sensitivity to state abnormalities, improving the accuracy of fault monitoring, and improving the charging efficiency of the target battery by combining dynamic charging with fault monitoring. Moreover, considering that battery operating conditions such as battery temperatures and battery aging parameters affect the state parameters of the target battery during the charging process, the recommended charging rate and state interval corresponding to the target battery are corrected based on battery temperatures and battery aging parameters, such that the dynamic adjustment and fault monitoring during the charging process are combined with the current operating conditions of the target battery, further improving the flexibility of dynamic charging and the accuracy of fault monitoring, and improving the charging efficiency of the target battery. In addition, by monitoring the charging duration of the target battery, macroscopic monitoring of the charging process is realized from the dimension of charging duration, so as to improve the comprehensiveness of fault monitoring and further improve the accuracy of fault monitoring.

It is to be noted that division of all of the above functional modules is described only as an example in a case where the apparatus for charging a battery according to above embodiments controls charging of a battery. In practice, the above functions are completed by different functional modules as required. That is, an internal structure of the apparatus is divided into different functional modules to complete all or part of the functions described above. In addition, the apparatus for charging a battery according to the above embodiments is belongs to the same concept as the embodiments of the method for charging a battery. For specific implementation process thereof, reference is made to the method embodiments, which is not described any further herein.

FIG. 4 is a schematic structural diagram of a computer device 400 according to an exemplary embodiment of the present disclosure.

Generally, the computer device 400 includes a processor 401 and a memory 402.

The processor 401 includes one or more processing cores, such as a 4-core processor and an 8-core processor. The processor 401 is implemented by at least one hardware of DSP (digital signal processing), an FPGA (field-programmable gate array), and a PLA (programmable logic array). The processor 401 also includes a main processor and a coprocessor. The main processor is a processor configured to process the data in an awake state, and is also called a CPU (central processing unit). The coprocessor is a low-power-consumption processor configured to process the data in a standby state. In some embodiments, the processor 401 is integrated with a GPU (graphics processing unit), which is configured to render and draw the content that needs to be displayed by a display screen. In some embodiments, the processor 901 also includes an AI (artificial intelligence) processor configured to process computational operations related to machine learning.

The memory 402 includes one or more computer-readable storage mediums, which can be non-transitory. The memory 402 also includes a high-speed random-access memory, as well as a non-volatile memory, such as one or more disk storage devices and flash storage devices. In some embodiments, a non-transitory computer-readable storage medium in the memory 402 is configured to store at least one instruction, which is executed by the processor 401 to implement the method for charging a battery according to the method embodiments of the present disclosure.

In some embodiments, a computer-readable storage medium is also provided, wherein the storage medium stores one or more computer program. A processor, when loading and executing the one or more computer programs, is caused to perform the method for charging a battery described in the above embodiments. For example, the computer-readable storage medium is a ROM, a RAM, a CD-ROM, a magnetic tape, a floppy disk, an optical data storage device, or the like.

It should be noted that the computer-readable storage medium mentioned in the embodiments of the present disclosure is a non-volatile storage medium, in other words, a nontransient storage medium.

It should be understood that all or part of the processes of the above embodiments are implemented through software, hardware, firmware, or any combination thereof. When implemented using software, it is fully or partially implemented in the form of a computer program product. The computer program product includes one or more computer instructions. The computer instructions are stored on the computer-readable storage medium.

That is, in some embodiments, a computer program product containing instructions is also provided. When executed on a computer, it causes the computer to perform the method for charging a battery as described above.

It should be understood that the term "at least one" as used herein refers to one or more, while "a plurality of" refers to two or more. In the description of the embodiments of the present disclosure, unless otherwise specified, "/" denotes "or". For example, A/B may denote A or B. The term "and/or" herein merely describes an associative relationship between associated objects, indicating that three types of relationships may exist. For example, A and/or B may denote: the sole existence of A, the simultaneous existence of A and B, or the sole existence of B. Additionally, to facilitate clear description of the technical solutions in the embodiments of the present disclosure, terms such as "first" and "second" are used to distinguish identical or similar items with essentially the same functions and roles. Those skilled in the art understand that such terms as "first" and "second" do not impose limitations on quantity or execution order, nor do they necessarily imply distinct differences.

It should be noted that the information (including but not limited to user device information, users' personal information, etc.), data (including but not limited to data for analysis, stored data, displayed data, etc.), and signals involved in the embodiments of this application are all authorized by the user or fully authorized by all parties. The collection, use and processing of such data must comply with the relevant laws, regulations, and standards of the respective countries and regions.

The foregoing descriptions are merely embodiments of the present disclosure, and are not intended to limit the present disclosure. Any modifications, equivalent substitutions, improvements, etc. made within the spirit and principles of the present disclosure are within the protection scope of the present disclosure.

**Claims**

1. A method for charging a battery, comprising:

    acquiring a current state of charge (SOC) and current state parameters of a target battery, wherein the current state parameters comprise current charging power, a current charging rate and/or a current temperature rise rate; determining state intervals corresponding to the target battery based on the current SOC, wherein the state intervals comprise a charging power interval, a charging rate interval and/or a temperature rise rate interval; adjusting, in a case where each of the current state parameters is within a corresponding interval of the state intervals, charging power of the target battery based on the current SOC and the current charging rate; and stopping charging in a case where any parameter of the current state parameters is not within a corresponding interval of the state intervals, and sending alarm information.

2. The method according to claim 1, wherein adjusting the charging power of the target battery based on the current SOC and the current charging rate comprises:

    determining a recommended charging rate corresponding to the target battery based on the current SOC, wherein the recommended charging rate comprises a maximum charging rate and a minimum charging rate, the maximum charging rate being less than a maximum value of the charging rate interval, and the minimum charging rate being greater than a minimum value of the charging rate interval; increasing the charging power of the target battery in a case where the current charging rate is less than the minimum charging rate, such that a charging rate of the target battery is greater than or equal to the minimum charging rate; and

decreasing the charging power of the target battery in a case where the current charging rate is greater than the maximum charging rate, such that the charging rate of the target battery is less than or equal to the maximum charging rate.

3. The method according to claim 2, wherein upon determining the recommended charging rate corresponding to the target battery based on the current SOC, the method further comprises:

correcting the recommended charging rate corresponding to the target battery based on a current battery temperature and a battery aging parameter of the target battery, wherein the battery aging parameter indicates an effect of battery life degradation on a charging state of the target battery during use.

4. The method according to claim 1, wherein upon determining the state interval corresponding to the target battery based on the current SOC, the method further comprises:

correcting the state interval based on a current battery temperature and a battery aging parameter of the target battery, wherein the battery aging parameter indicates an effect of battery life degradation on a charging state of the target battery during use.

5. The method according to claim 3 or 4, further comprising:

determining the battery aging parameter based on historical charging data of the target battery, wherein the historical charging data comprises a change amount in charging power, cumulative usage duration, and/or a number of charging cycles, wherein the change amount in charging power comprises an increase in charging power and/or a decrease in charging power.

6. The method according to claim 1 or 2, further comprising:

monitoring a charging duration of the target battery; and

stopping charging in a case where the charging duration is greater than a first duration threshold or less than a second duration threshold, and sending alarm information, the first duration threshold being greater than the second duration threshold.

7. An apparatus for charging a battery, comprising:

a battery information acquiring module, configured to acquire a current state of charge (SOC) and current state parameters of a target battery, wherein the current state parameters comprise current charging power, a current charging rate and/or a current temperature rise rate;

a state interval determining module, configured to determine state intervals corresponding to the target battery based on the current SOC, wherein the state intervals comprise a charging power interval, a charging rate interval and/or a temperature rise rate interval;

a power adjusting module, configured to adjust, in a case where each of the current state parameters is within a corresponding interval of the state intervals, charging power of the target battery based on the current SOC and the current charging rate; and

an alarming module, configured to stop charging in a case where any parameter of the current state parameters is not within a corresponding interval of the state intervals, and send alarm information.

8. The apparatus according to claim 7, wherein the power adjusting module comprises:

a rate determining submodule, configured to determine a recommended charging rate corresponding to the target battery based on the current SOC, wherein the recommended charging rate comprises a maximum charging rate and a minimum charging rate, the maximum charging rate being less than a maximum value of the charging rate interval, and the minimum charging rate being greater than a minimum value of the charging rate interval;

a power increasing submodule, configured to increase the charging power of the target battery in a case where the current charging rate is less than the minimum charging rate, such that a charging rate of the target battery is greater than or equal to the minimum charging rate; and

a power decreasing submodule, configured to decrease the charging power of the target battery in a case where the current charging rate is greater than the maximum charging rate, such that the charging rate of the target battery is less than or equal to the maximum charging rate.

9. A computer device, comprising a memory and a processor, the memory is configured to store one or more computer programs, wherein the processor, when loading and executing the one or more computer programs stored in the memory, is caused to perform the method as defined in any one of claims 1 to 6.

10. A computer-readable storage medium, storing one or more computer programs, wherein a processor, when loading and executing the one or more computer programs, is caused to perform the method as defined in any one of claims 1 to 6.

```
┌─────────────────┐              ┌─────────────────┐
│                 │   101        │                 │   102
│     Sensor      │──────────────│     Battery     │
│                 │              │                 │
└─────────────────┘              └─────────────────┘
        │                                 │
        │           104                   │          103
┌─────────────────┐              ┌─────────────────┐
│                 │              │                 │
│   Processor     │──────────────│    Charging     │
│                 │              │     module      │
└─────────────────┘              └─────────────────┘
```

FIG. 1

```
┌────────────────────────────────────────────────────────────────────┐
│                                                                      │   201
│  Acquiring a current state of charge (SOC) and current state         │
│  parameters of a target battery, wherein the current state           │
│  parameters includes current charging power, a current               │
│  charging rate, and/or a current temperature rise rate               │
└────────────────────────────────────────────────────────────────────┘
                                  │
                                  ▼
┌────────────────────────────────────────────────────────────────────┐
│                                                                      │   202
│  Determining state intervals corresponding to the target battery     │
│  based on the current SOC, wherein the state intervals includes a     │
│  charging power interval, a charging rate interval, and/or a          │
│  temperature rise rate interval                                       │
└────────────────────────────────────────────────────────────────────┘
          │                                         │
          ▼                                         ▼
┌──────────────────────────┐            ┌──────────────────────────┐
│                      203 │            │                      204 │
│  Adjusting, in a case    │            │  Stopping charging in a  │
│  where each of the       │            │  case where any          │
│  current state           │            │  parameter of the        │
│  parameters is within    │            │  current state           │
│  a corresponding         │            │  parameters is not       │
│  interval of the state   │            │  within a                │
│  intervals, charging     │            │  corresponding interval  │
│  power of the target     │            │  of the state intervals, │
│  battery based on the    │            │  and sending alarm       │
│  current SOC and the     │            │  information             │
│  current charging rate   │            │                          │
└──────────────────────────┘            └──────────────────────────┘
```

FIG. 2

```
┌─────────────────────────────┐
│ Battery information acquiring │      301
│          module             │
└─────────────────────────────┘
              │
┌─────────────────────────────┐
│  State interval determining  │      302
│          module             │
└─────────────────────────────┘
         │         │
┌──────────────┐      ┌──────────────┐
│    303        │      │    304        │
│Power adjusting │      │   Alarming    │
│   module      │      │    module     │
└──────────────┘      └──────────────┘
```

FIG. 3

400

```
┌──────────────────┐
│      401          │
│   Processor       │
└──────────────────┘
         ↕
┌──────────────────┐
│      402          │
│   Memory          │
└──────────────────┘
```

FIG. 4

## INTERNATIONAL SEARCH REPORT

| International application No. |
|---|
| **PCT/CN2024/094517** |

| A. | CLASSIFICATION OF SUBJECT MATTER |
|---|---|

H01M10/44(2006.01)i; H02J7/00(2006.01)i; H02H7/18(2006.01)i

According to International Patent Classification (IPC) or to both national classification and IPC

| B. | FIELDS SEARCHED |
|---|---|

Minimum documentation searched (classification system followed by classification symbols)

IPC:H01M,H02J,H02H

Documentation searched other than minimum documentation to the extent that such documents are included in the fields searched

Electronic data base consulted during the international search (name of data base and, where practicable, search terms used)

CNTXT, ENTXTC, DWPI, VEN, IEEE, CNKI: 报警, 功率, 充电速度, 充电速率, 充电状态, 等级, 级别, 区间, 电池, 状态, 电荷状态, 调整, 范围, 警告, 报警, 警报, 速度, 速率, 温度, 修订, alarm, soc, SOC, state of charg+, level, rate, charge, battery, temperature

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 117673523 A (CHERY AUTOMOBILE CO., LTD.) 08 March 2024 (2024-03-08) claims 1-10 | 1-10 |
| Y | CN 116068441 A (BEIQI FOTON MOTOR CO., LTD.) 05 May 2023 (2023-05-05) description, paragraphs 54-110, and figures 1 and 4 | 1-10 |
| Y | CN 115347652 A (JIANGXI JIANGLING GROUP NEW ENERGY AUTOMOBILE CO., LTD.) 15 November 2022 (2022-11-15) description, paragraphs 22-44, and figures 1-3 | 1-10 |
| A | CN 112290649 A (STATE GRID BEIJING ELECTRIC POWER COMPANY et al.) 29 January 2021 (2021-01-29) entire document | 1-10 |
| A | CN 113665433 A (SANY AUTOMOBILE HOISTING MACHINERY CO., LTD.) 19 November 2021 (2021-11-19) entire document | 1-10 |

☑ Further documents are listed in the continuation of Box C.     ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **21 August 2024** | **26 August 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/094517** |

**C.     DOCUMENTS CONSIDERED TO BE RELEVANT**

| Category* | Citation of document, with indication, where appropriate, of the relevant passages | Relevant to claim No. |
| --- | --- | --- |
| A | US 2023034272 A1 (CONTEMPORARY AMPEREX TECHNOLOGY CO., LTD.) 02 February 2023 (2023-02-02)<br>entire document | 1-10 |

Form PCT/ISA/210 (second sheet) (July 2022)

## INTERNATIONAL SEARCH REPORT
### Information on patent family members

International application No.

**PCT/CN2024/094517**

| Patent document cited in search report | | | Publication date (day/month/year) | Patent family member(s) | | | Publication date (day/month/year) |
|---|---|---|---|---|---|---|---|
| CN | 117673523 | A | 08 March 2024 | None | | | |
| CN | 116068441 | A | 05 May 2023 | None | | | |
| CN | 115347652 | A | 15 November 2022 | None | | | |
| CN | 112290649 | A | 29 January 2021 | None | | | |
| CN | 113665433 | A | 19 November 2021 | None | | | |
| US | 2023034272 | A1 | 02 February 2023 | EP | 4152474 | A1 | 22 March 2023 |
| | | | | EP | 4152474 | A4 | 02 August 2023 |
| | | | | WO | 2023004645 | A1 | 02 February 2023 |

Form PCT/ISA/210 (patent family annex) (July 2022)

**REFERENCES CITED IN THE DESCRIPTION**

**Patent documents cited in the description**

- CN 202311684189